# EUROPEAN PATENT APPLICATION

(11) **EP 3 993 274 A1**
(43) Date of publication of application: **04.05.2022**
(21) Application number: 20205210.6
(22) Date of filing: 02.11.2020
(51) Int. Cl.: H04B 1/04, H04B 1/10, H04B 17/309, H04B 17/17, H04B 1/54, G08G 5/00

(54) **RADIO TRANSMISSION MONITORING SYSTEM, AIR TRAFFIC CONTROL AS WELL AS A METHOD OF A MONITORING RADIO TRANSMISSION**

(71) Applicant: Rohde & Schwarz GmbH & Co. KG, 81671 München (DE)
(72) Inventor: Slavik, Jindrich, 81671 München (DE)
(74) Representative: Prinz & Partner mbB

(57) **Abstract**

The invention provides a radio transmission monitoring system for monitoring a radio communication system (14). The radio transmission monitoring system (26) comprises at least one transmitter (16) at a first dedicated location, at least one receiver (18) at a second dedicated location, a voice communication system (20) as well as a monitoring module (28). The voice communication system (20) is connected with the at last one transmitter (16) and the at least one receiver (18). The monitoring module (28) is also connected with the at last one transmitter (16) and the at least one receiver (18). The monitoring module (28) is configured to receive a transmission signal to be transmitted by the transmitter (16) and a reception signal received by the receiver (18). The monitoring module (28) is configured to evaluate a time delay between the transmission signal and the reception signal and/or a received signal strength indicator. Further, an air traffic control (10) for controlling an air space (12) as well as a method of monitoring radio transmission are described.

## Description

The invention relates to a radio transmission monitoring system for monitoring a radio communication system. Further, the invention relates to an air traffic control (ATC) for controlling an air space as well as a method of monitoring radio transmission.

Air traffic control (ATC) of an air space is typically done by air navigation service providers (ANSPs) that are public or private legal entities. Hence, the ANSPs provide respective air navigation services. The air traffic control is typically based on a voice communication system (VCS) that enables a controller to communicate with an aircraft within the air space controlled by exchanging voice signals. For this purpose, a radio communication system is provided that typically comprises at least one receiver as well as at least one transmitter which may be located at an airport.

The radio communication system has to be monitored in order to identify any faults or failures that may occur, thereby ensuring proper operability of the entire radio communication system.

In the state of the art, a specific signal is manually sent, which is evaluated manually in order to identify an error. However, the respective signal used by the method known in the state of the art occupies a communication channel, thereby reducing the capacity of the radio communication system during the testing of the radio communication system.

Furthermore, the manual evaluation requires big efforts such that the costs for identifying a failure of the radio communication system are high. Moreover, the maintenance costs are high, as a technician of the ANSP has to travel to the respective airports for testing the radio communication systems.

Accordingly, there is a need for a radio transmission monitoring system, an air traffic control as well as a method of monitoring radio transmission that allow cost-efficient and automatic detection of a failure.

The invention provides a radio transmission monitoring system for monitoring a radio communication system (RCS). The radio transmission monitoring system comprises at least one transmitter at a first dedicated location, at least one receiver at a second dedicated location, a voice communication system (VCS) as well as a monitoring module. The voice communication system is connected with the at least one transmitter and the at least one receiver. The monitoring module is also connected with the at least one transmitter and the at least one receiver. The monitoring module is configured to receive a transmission signal to be transmitted by the transmitter and a reception signal received by the receiver. The monitoring module is also configured to evaluate a time delay between the transmission signal and the reception signal and/or a received signal strength indicator (RSSI).

The invention is based on the finding that the radio communication system can be monitored in a cost-efficient as well as automatic manner by checking the radio communication system, namely the transmitter and the receiver, during its regular operation. The transmitter and the receiver correspond to the ones of the radio communication system to be monitored. In other words, the radio transmission monitoring system and the radio communication system share components, namely the transmitter, the receiver and the voice communication system.

Accordingly, the transmission signal that is transmitted during its normal operation is used for monitoring the radio communication system such that no additional occupation of a communication channel takes place during the monitoring of the radio communication system in contrast to the state of the art. Thus, the transmission signal may relate to a signal provided by the voice communication system during regular operation of the voice communication system. Since the radio transmission monitoring system also takes the at least one receiver into account, the radio transmission monitoring system is enabled to check the operation of the transmission chain as well as the reception chain appropriately, as the radio transmission monitoring system gathers information from the transmission chain as well as the reception chain, namely the transmission signal and the reception signal.

Accordingly, the transmission signal is provided by the voice communication system, namely during regular operation of the radio communication system.

In addition, the radio transmission monitoring system, particularly the monitoring module, is enabled to automatically identify any problem related to the transmitter and/or receiver, for instance a hardware problem such as ice on an antenna associated with the transmitter and/or receiver.

As mentioned above, any transmission made by the radio communication system, particularly the voice communication system controlling the transmitter and/or receiver, can be used to check the overall availability of the radio communication system, particularly its components. Therefore, no special voice communication system is necessary, as the radio transmission monitoring system, particularly its monitoring module, is configured to identify any failure or rather error while using information exchanged between the voice communication system and a radio being a communication partner of the voice communication system, for instance a radio associated with an aircraft.

For instance, each transmission of a controller is used for monitoring purposes in order to identify a problem or rather failure. The controller typically used the voice communication system in order to transmit a signal to a receiver such as the radio of an aircraft. The respective transmission is received by all receivers at the ground tuned to the same frequency, thereby generating the reception signal(s) that is forwarded to the monitoring module for evaluation purposes. Besides the reception signal(s), the monitoring module also receives the transmission signal to be transmitted via the at least one transmitter.

Hence, the monitoring module may at least tap a line between the at least one transmitter and the voice communication system.

Particularly, the monitoring module receives a copy of the respective signal, for instance a Real-Time Transport Protocol (RTP) stream. In the respective signal, for instance an ED-137 compliant RTP stream, information concerning the received signal strength indicator (RSSI) is provided which is extracted appropriately.

Generally, maintenance efforts of the radio communication system can be reduced significantly, as it is no more necessary that a service technician of an air navigation service provider (ANSP) has to travel to the respective airport/site in order to manually check the radio communication system for maintenance purposes.

The radio transmission monitoring system is preferably used in an air traffic control (ATC).

Accordingly, the invention also provides an air traffic control (ATC) for controlling an air space, wherein the air traffic control comprises the radio transmission monitoring system mentioned above.

The radio communication system is associated with an airport such that the at least one transmitter as well as the at least one receiver are also assigned to the airport.

In general, the radio communication system that is monitored by the radio transmission monitoring system may be part of the air traffic control. The radio communication system may comprise a large network having several radios that are used for communication with aircrafts. The radio transmission monitoring system allows to monitor the availability of the entire radio communication system appropriately.

The transmission signal to be transmitted as well as the reception signal may be copied, thereby doubling the respective signals such that a first transmission signal and a second transmission signal as well as a first reception signal and a second reception signal are provided. The first transmission signal may be forwarded to the transmitter for being transmitted by the transmitter, whereas the second transmission signal, also called the copied one, is forwarded to the monitoring module for evaluating purposes. In a similar manner, the first reception signal may be forwarded to the receiver, whereas the second reception signal, also called the copied one, is forwarded to the monitoring module for evaluating purposes.

An aspect provides that the reception signal received by the receiver relates to the transmission signal that is propagated along a signal path established between the transmitter and the receiver. Therefore, the receiver of the radio communication system is enabled to receive the transmission signal that has been transmitted by the transmitter after the signal has travelled along the signal path. The receiver as well as the transmitter are connected with the voice communication system that is associated with the monitoring module such that the respective signals, namely the transmission signal to be transmitted by the transmitter as well as the reception signal received by the receiver, are forwarded to the voice communication system and/or the monitoring module. Specifically, the transmission signal to be transmitted as well as the reception signal are forwarded to the monitoring module for evaluating purposes, whereas the reception signal may also be forwarded to the voice communication system that issues the transmission signal to be transmitted.

Another aspect provides that the monitoring module is configured to evaluate a squelch line associated with the receiver. Generally, the squelch is a function that acts to suppress the output of the receiver in the absence of a strong input signal. Thus, the radio transmission monitoring system is enabled to evaluate the respective squelch delay that corresponds to the time between transmission and reception until the radio is activated. The respective time delay associated with the squelch line may be for example 100 milliseconds.

A further aspect provides that the monitoring module is configured to trigger an alert when the time delay reaches or exceeds a threshold value for the time delay. The transmitter and the receiver are distanced from each other by a certain distance that is known, particularly due to the fact that each transmitter or rather receiver has a unique identification. The respective distance known is used to determine the dedicated threshold value for the respective communication pair consisting of the active transmitter and the receiver. The threshold value may indicate that the respective time delay is still sufficient for proper operation of the radio communication system. If the occurring time delay reaches or rather exceeds the threshold value, it can be assumed that an error or rather failure has occurred in the radio communication system. Particularly, the delay time indicates a problem with the transmitter or the receiver.

Moreover, the monitoring module may be configured to trigger an alert when the received signal strength indicator is higher or lower than the threshold value for the received signals strength indicator. The RSSI value is used to indicate a problem associated with the transmitter and/or the receiver. Thus, a deviation of the RSSI gathered from an expected value may be an indicator of a respective problem.

When evaluating the RSSI and the delay time, the kind of failure within the entire radio communication system can be identified more accurately.

The radio transmission monitoring system may take signals of several transmitters and/or receiver, particularly pairs of transmitter and receiver, into account to further locate the problem/failure within the entire radio communication system.

Moreover, statistical information may be gathered when evaluating more signals.

Furthermore, a signal strength of the transmission signal and/or a signal strength of the reception signal are/is determined. The respective signal strength is used to verify whether an error occurs within the transmission chain or rather the reception chain. In addition, the respective signal strengths are used to determine the RSSI value accordingly. Accordingly, a deviating RSSI value and a respective signal strength being indicative may help to clearly identify the source of failure.

According to another aspect, the monitoring module is configured to trigger an alert when the signal strength of the transmission signal or the reception signal is lower than a threshold value for the signal strength. A failure associated with the transmitter or rather the receiver can be identified in a reliable manner based on that information. For instance, terrestrial effects or rather signal attenuation in the respective chain may be identified.

The monitoring module may be configured to detect a failure associated with a transmitter and/or the receiver. Particularly, a failure of the transmitter and/or a failure of the receiver or rather a cable connected therewith can be identified appropriately. For instance, a certain time delay (reaching or rather exceeding the respective threshold value) may correspond to an issue with the transmission chain or rather the reception chain provided that the RSSI value does not indicate any failure. In case of an RSSI value deviating from an expected value, it can be assumed that an antenna associated with a transmitter or rather the receiver has an issue, resulting in an attenuation that has an influence on the RSSI value. Furthermore, a too low signal level or rather signal strength may indicate a failure associated with a cable connection of the transmitter or rather receiver, as the too low signal level/strength may originate from an attenuation of the respective signal.

Generally, the respective threshold value may be pre-set or rather statistically determined, for instance based on past information gathered when monitoring the radio communication system. Accordingly, the respective threshold value may be adapted dynamically, particularly during each evaluation step performed or rather each signal transmission.

Further, the monitoring module triggers an alert that is outputted, for instance visually and/or acoustically, in order to directly inform an operator or rather controller.

According to another aspect, several transmitters and/or several receivers are provided, wherein the monitoring module is configured to obtain a measurement result for each transmitter and/or each receiver, and wherein the monitoring module is configured to correlate the measurement results. Thus, multiple systems are provided and used to precisely detect the source of error/failure by correlating the measurement results obtained. The data basis for monitoring the radio communication system is increased when overlaying the measurement results obtained from the several pairs, namely the several transmitters and/or several receivers.

Moreover, the first dedicated location may be different to the second dedicated location such that the first dedicated location is spaced apart from the second dedicated location. The receiver and the transmitter may be located at different locations at the airport, particularly at different ends at ground. Therefore, the transmitter and the receiver may be distanced from each other by a maximum distance such that mutual interference is prevented effectively.

The voice communication system may be used by an air navigation service provider (ANSP) for communicating with participants in an air space. The voice communication system is typically used to communicate with radios associated with aircrafts flying in the air space controlled by the air navigation service provider.

The monitoring module may be integrated within the voice communication system. Thus, the voice communication system itself may be configured to evaluate the respective signals, namely the transmission signal as well as the reception signal, in order to evaluate the time delay between the transmission signal and the reception signal and/or the RSSI value.

Alternatively, the monitoring module may be a passive monitoring module that is formed separately with respect to the voice communication system. The passive monitoring module may use ATC voice quality assurance (AVQA). In fact, the passive monitoring module may comprise at least one internet protocol (IP) probe, particularly a plurality of IP probes, configured to monitor an IP traffic of at least one component of the radio communication system. Moreover, the passive monitoring module has a traffic analyser that is connected with the IP probe for receiving the probed IP traffic to be analysed.

The traffic analyser may determine a voice quality indicator, especially a mean opinion score, MOS, based on the monitored IP traffic, and/or a jitter value, and/or a round trip delay value, and/or a packet arrival time histogram, and/or a packet loss rate, and/or a burst loss rate, and/or a loss density, and/or a transport policy.

The passive monitoring module, particularly the IP probe, may gather information from the respective signals, namely the RTP streams, thereby gathering information concerning the time delay and/or the RSSI.

In general, the radio communication system may be an IP-based one such that its components, for instance, the receiver, the transmitter and the voice communication system are IP-based components. Particularly, the respective components are integrated within a wide area network (WAN). The passive monitoring module, particularly the at least one IP probe, is located within the IP-based network, for instance the WAN.

In addition, the invention provides a method of monitoring radio transmission, wherein the method comprises the steps of:
- Receiving a transmission signal to be transmitted by a transmitter by means of a monitoring module, wherein the transmitter is connected with a voice communication system,
- Receiving a reception signal received by a receiver by means of the monitoring module, wherein the receiver is connected with the voice communication system, and
- Processing the transmission signal and the reception signal by means of the monitoring module, thereby evaluating a time delay between the transmission signal and the reception signal and/or a received signal strength indicator.

The features and advantages mentioned above with regard to the radio transmission monitoring system also apply to the method in a similar manner.

The radio communication system is monitored continuously during its regular operation. Therefore, an autonomous and steady monitoring of the radio communication system takes place without the need of any manual interaction, thereby reducing the overall costs significantly, particularly the maintenance costs.

The radio transmission monitoring system may be configured to perform the method described above.

Further aspects and advantages of the claimed subject matter will become more readily appreciated as the same become better understood by reference to the following detailed description, when taken in conjunction with the accompanying drawings. In the drawings,
- Figure 1 schematically shows an overview of an air traffic control according to the invention that comprises a radio transmission monitoring system according to the invention, and
- Figure 2 schematically shows a flow-chart illustrating a method of monitoring radio transmission according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

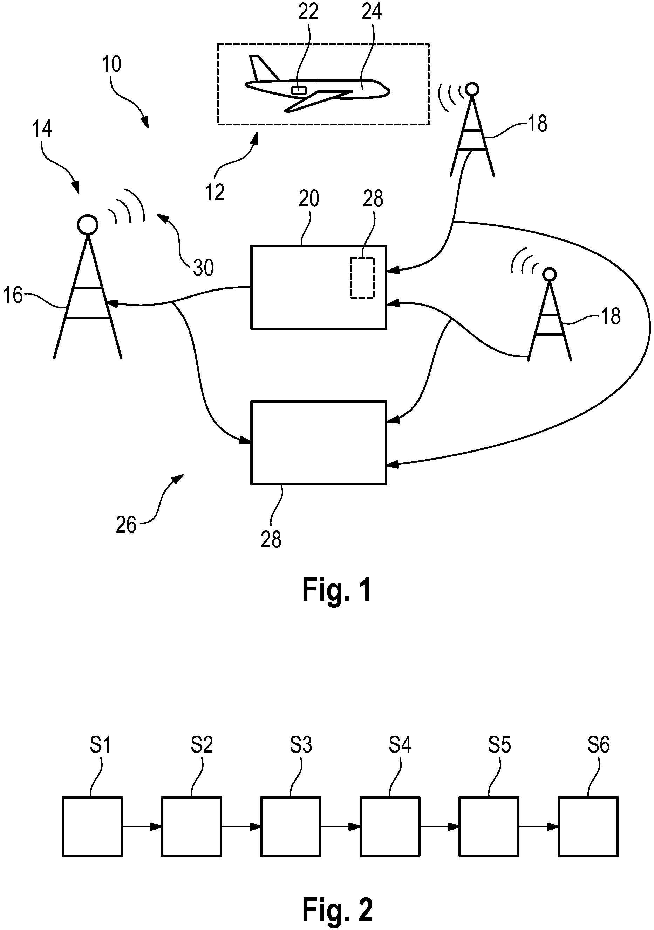

In Figure 1, an air traffic control (ATC) 10 for controlling an air space 12 is shown, which comprises a radio communication system 14 associated with an airport.

The radio communication system 14 has at least one transmitter 16 that is located as a first dedicated location as well as several receivers 18 that are located at different dedicated locations, particularly at different ends of the airport.

The air traffic control 10 further comprises a voice communication system 20 that is connected with the transmitter 16 as well as the receivers 18 such that voice signals can be exchanged with the transmitter 16 and the receivers 18 appropriately in order to communicate with a radio 22 associated with an aircraft 24 flying in the air space 12 controlled by the air traffic control 10. The air traffic control 10 may be operated by an air navigation service provider that used the radio communication system 14 for communicating with participants in the air space 12.

The radio communication system 14 may correspond to an IP-based one, as the respective communicate with each other via an IP infrastructure.

Generally, the radio communication system 14 may comprise a large (IP-based) network having several radios that are used for communication with the aircrafts 24 in the air space 12. The radios are associated with the transmitter(s) 16 and the receiver(s) 18 located at the ground, particularly at the airport.

In addition, the air traffic control 10 also comprises a radio transmission monitoring system 26 that comprises a monitoring module 28.

In fact, the radio transmission monitoring system 26 that is part of the air traffic control 10 may be formed such that it comprises the at least one transmitter 16 as well as the receivers 18.

The monitoring module 28 is connected with the transmitter 16 as well as the receivers 18 such that information can be exchanged appropriately.

In the shown embodiment, the monitoring module 28 is separately formed, thereby establishing a passive monitoring module. The passive monitoring module may comprise IP-probes that tap the respective communication lines of the components of the radio communication system 14 as schematically shown in Figure 1.

Alternatively, the monitoring module 28 may be integrated within the voice communication system 20 as indicated in Figure 1 by the dashed lines.

In any case, the monitoring module 28 is enabled to receive a transmission signal to be transmitted by the transmitter 16, namely a signal provided by the voice communication system 20 that is forwarded to the at least one transmitter 16, as well as at least one reception signal received by at least one of the receivers 18, wherein the reception signal may also be forwarded to the voice communication system 20.

The reception signal received by the receivers 18 relates to the transmission signal that has propagated along a signal path 30 established between the transmitter 16 and the receiver 18.

Therefore, the monitoring module 28 is enabled to receive several reception signals that are received by each of the receivers 18, wherein each of the receivers 18 receives the transmission signal after it has travelled along the respective signal path 30 established between the transmitter 16 and each of the different receivers 18 that may be located at different locations. In other words, the transmitter 16 and the receivers 18 establish pairs, wherein each pair provides a specific reception signal for the monitoring module 28 for evaluating purposes.

The monitoring module 28 that receives the transmission signal to be transmitted via the transmitter 16 as well as the reception signal(s) from the receivers 18 gathers information that is used for evaluation purposes, thereby monitoring the radio communication system 14.

Generally, several transmitters 16 and/or several receivers 18 may be provided, wherein the monitoring module 28 is configured to obtain a measurement result for each pair consisting of a transmitter 16 and a corresponding receiver 18 receiving the respective transmission signal. Hence, the monitoring module 28 is configured to correlate the measurement results obtained from each pair in order to more accurately locate the source of failure/error within the radio communication system 14.

In fact, the monitoring module 28 is enabled to evaluate a time delay between the respective signals forwarded to the monitoring module 28, namely the transmission signal and the reception signal(s). Hence, a problem with the transmitter 16 or the receiver(s) 18 can be identified appropriately, as the delay time is indicate thereof.

In addition, the monitoring module 28 is also configured to evaluate a received signal strength indicator (RSSI). In a similar manner, the RSSI value determined can be used to indicate a problem associated with the transmitter 16 and/or the receiver(s) 18. Thus, a deviation of the RSSI gathered from an expected value may be an indicator of a respective problem.

The monitoring module 28 is also enabled to determine a signal strength or rather signal level of the transmission signal and/or the reception signal, thereby identifying a failure/error with the hardware itself, namely the transmitter 16 or rather the receiver(s) 18 as well as its peripheral components such as cable connections.

Further, the monitoring module 28 may evaluate a squelch line associated with the receiver(s) 18.

Due to the respective evaluation done by the monitoring module 28, the monitoring module 28 is generally enabled to detect a failure associated with the transmitter 16 and/or the receiver(s) 18.

When taking several signals of different receivers 18 into account, more information is gathered, which can be used for a statistical evaluation. Moreover, the source of failure can be determined more precisely when having more data for evaluation purposes.

Generally, the monitoring module 28 is also enabled to trigger an alert in order to inform an operator or rather controller of the air traffic control 10 concerning a failure identified. The respective alert may be triggered by the monitoring module 28 provided that the time delay reaches or exceeds a threshold value for the time delay.

Further, the monitoring module 28 may trigger an alert when the received signal strength indicator (RSSI) is higher or lower than a threshold value for the received signal strength indicator.

Moreover, the monitoring module 28 may trigger an alert by the signal strength/level of the transmission signal or of the reception signal is lower than a threshold value for the signal strength. Thus, the signal strength itself may also be evaluated by the monitoring module 28 in order to identify an error or rather failure in the transmission chain.

The respective threshold value(s) may be pre-determined and static and/or based on past information such that the respective threshold value(s) may be adapted dynamically over the time. Hence, an absolute threshold, namely the pre-determined and static one, as well as a relative threshold may be provided, wherein the latter one is used to identify a suddenly occurring failure/error due to an abrupt change.

In Figure 2, a flow-chart is shown that illustrates a method of monitoring radio transmission that can be performed by the radio transmission monitoring system 26.

In a first step S1, a transmission signal is provided by the voice communication system 20 that is forwarded to the transmitter 16 for being transmitted in order to communicate with the radio 22 of the aircraft 24, for instance.

In a second step S2, the transmission signal is split/copied/tapped such that it is also forwarded to the monitoring module 28 that receives the transmission signal to be transmitted by the transmitter 16.

In a third step S3, the transmitter 16 transmits the transmission signal. The transmission signal is received by the radio 22 of the aircraft 24 as well as at least one of the receivers 18 located at the ground, particularly in case the receiver(s) 18 are/is tuned to the same frequency as the transmitter 16. The receiver(s) 18 generate a reception signal that relates to the transmission signal that has propagated along the signal path 30 established between the transmitter 16 and the respective receiver 18.

In a fourth step S4, the reception signal is forwarded to the voice communication system 20 for being evaluated by the voice communication system 20.

In a fifth step S5, the reception signal is also forwarded to the monitoring module 28 for being evaluated.

In a sixth step S6, both the transmission signal and the reception signal are processed and evaluated by the monitoring module 28, thereby evaluating the time delay between the transmission signal and the reception signal, the received signal strength indicator (RSSI) and the signal strength/level of the transmission signal or rather reception signal in order to identify an error or failure in the radio communication system 14.

In general, the radio transmission monitoring system 26 ensures an automatic identification of any failures or rather problems associated with the radio communication system 14 of the air traffic control 10 without occupying a communication channel for testing purposes additionally, as the radio transmission monitoring system 26 uses the voice signals used during regular operation of the radio communication system 14 for monitoring purposes.

## Claims

1. A radio transmission monitoring system for monitoring a radio communication system (14), wherein the radio transmission monitoring system (26) comprises at least one transmitter (16) at a first dedicated location, at least one receiver (18) at a second dedicated location, a voice communication system (20) as well as a monitoring module (28), wherein the voice communication system (20) is connected with the at last one transmitter (16) and the at least one receiver (18), wherein the monitoring module (28) is also connected with the at last one transmitter (16) and the at least one receiver (18), wherein the monitoring module (28) is configured to receive a transmission signal to be transmitted by the transmitter (16) and a reception signal received by the receiver (18), and wherein the monitoring module (28) is configured to evaluate a time delay between the transmission signal and the reception signal and/or a received signal strength indicator.

2. The radio transmission monitoring system according to claim 1, wherein the reception signal received by the receiver (18) relates to the transmission signal that is propagated along a signal path (30) established between the transmitter (16) and the receiver (18).

3. The radio transmission monitoring system according to claim 1 or 2, wherein the monitoring module (28) is configured to evaluate a squelch line associated with the receiver (18).

4. The radio transmission monitoring system according to any of the preceding claims, wherein the monitoring module (28) is configured to trigger an alert when the time delay reaches or exceeds a threshold value for the time delay.

5. The radio transmission monitoring system according to any of the preceding claims, wherein the monitoring module (28) is configured to trigger an alert when the received signal strength indicator is higher or lower than a threshold value for the received signal strength indicator.

6. The radio transmission monitoring system according to any of the preceding claims, wherein a signal strength of the transmission signal and/or a signal strength of the reception signal are/is determined.

7. The radio transmission monitoring system according to claim 6, wherein the monitoring module (28) is configured to trigger an alert when the signal strength of the transmission signal or the reception signal is lower than a threshold value for the signal strength.

8. The radio transmission monitoring system according to any of the preceding claims, wherein the monitoring module (28) is configured to detect a failure associated with the transmitter (16) and/or the receiver (18), particularly a failure of the transmitter (16) and/or the receiver (18) or rather a cable connected therewith.

9. The radio transmission monitoring system according to any of the preceding claims, wherein several transmitters (16) and/or several receivers (18) are provided, and wherein the monitoring module (28) is configured to obtain a measurement result for each transmitter (16) and/or each receiver (18), and wherein the monitoring module (28) is configured to correlate the measurement results.

10. The radio transmission monitoring system according to any of the preceding claims, wherein the first dedicated location is different to the second dedicated location such that the first dedicated location is spaced apart from the second dedicated location.

11. The radio transmission monitoring system according to any of the preceding claims, wherein the voice communication system (20) is used by an air navigation service provider for communicating with participants in an air space (12).

12. The radio transmission monitoring system according to any of the preceding claims, wherein the monitoring module (28) is integrated within the voice communication system (20).

13. The radio transmission monitoring system according to any of the preceding claims, wherein the monitoring module (28) is a passive monitoring module that is formed separately with respect to the voice communication system (20).

14. An air traffic control (10) for controlling an air space (12), wherein the air traffic control (10) comprises the radio transmission monitoring system (26) according to any of the preceding claims.

15. A method of monitoring radio transmission, wherein the method comprises the steps of:
- Receiving a transmission signal to be transmitted by a transmitter (16) by means of a monitoring module (28), wherein the transmitter (16) is connected with a voice communication system (20),
- Receiving a reception signal received by a receiver (18) by means of the monitoring module (28), wherein the receiver (18) is connected with the voice communication system (20), and
- Processing the transmission signal and the reception signal by means of the monitoring module (28), thereby evaluating a time delay between the transmission signal and the reception signal and/or a received signal strength indicator.
